# EUROPÄISCHE PATENTSCHRIFT

(11) **EP 1 296 159 B1**
(45) Veröffentlichungstag und Bekanntmachung des Hinweises auf die Patenterteilung: **03.07.2013**
(21) Anmeldenummer: 02015317.7
(22) Anmeldetag: 10.07.2002
(51) Int. Cl.: G01S 15/93, G01S 15/87, G01S 7/527

(54) **Verfahren zur Abstandsmessung**
Method for measuring distance
Procédé de mesure de distance

(30) Priorität: 19.09.2001 DE 10146095
(43) Veröffentlichungstag der Anmeldung: 26.03.2003
(73) Patentinhaber: ROBERT BOSCH GMBH, 70442 Stuttgart (DE)
(72) Erfinder: Schlick, Michael, 76372 Pfinztal (DE); Richter, Karl-Heinz, 71263 Weil Der Stadt (DE); Schmid, Dirk, 75397 Simmozheim (DE)

(56) Entgegenhaltungen:
- EP-A- 0 142 733
- EP-A- 0 971 242
- DD-A- 203 781
- DE-A1- 4 433 957
- DE-A1- 19 645 339
- DE-A1- 19 842 250
- JP-A- 4 238 286
- US-A- 4 451 909
- US-A- 4 677 599
- US-A- 5 177 711
- US-A- 5 793 704

## Beschreibung

### Stand der Technik

Die Erfindung geht aus von einem Verfahren zur Abstandsmessung nach der Gattung des Hauptanspruchs. Es sind schon Verfahren zur Abstandsmessung bekannt, die auf einem Echomessprinzip beruhen. Hierbei wird ein Signal ausgesendet, von einem Hindernis reflektiert und das reflektierte Signal wird detektiert. Aus der Laufzeit des Signals wird die Entfernung zu dem Hindernis bestimmt, das das Signal reflektiert hat. Derartige Systeme finden insbesondere im Kraftfahrzeug Verwendung. Sie dienen dazu, für einen Fahrer schlecht einsehbare Bereiche abzusichern, ein abstandgeregeltes Folgefahren zu ermöglichen oder gegebenenfalls ein Auffahren des Fahrzeugs auf ein Hindernis verhindern zu helfen. Als Signale werden Ultraschallwellen, Radarwellen oder andere elektromagnetische Wellen verwendet, z.B. Laserlicht. Welche Art von Signalen verwendet wird, ist dabei von dem geplanten Anwendungsfall abhängig. So wird Radar insbesondere für die Detektion von Hindernissen in weiterer Entfernungen eingesetzt, während für eine Einparkhilfe im Nahbereich des Fahrzeugs Ultraschallwellen verwendet werden.

Die Ultraschallwellen werden von einem Signalgeber vorzugsweise in einer keulenförmigen Verteilung abgestrahlt. In dieser Verteilung liegen gegebenenfalls nicht nur Hindernisse, deren Anwesenheit detektiert werden soll, sondern auch z.B. die Fahrbahn. Hierbei kann es zu Fehlwarnungen kommen, da von einer rauhen Fahrbahnoberfläche, die z.B. mit Schotter bedeckt oder mit Schlaglöcher durchsetzt ist, Signale zu einem Ultraschallempfänger zurückgeworfen werden. Dieser störende Effekt tritt vorzugsweise in einem bestimmten, mittleren Entfernungsbereich auf, in dem die keulenförmige Ultraschallwellenverteilung des Ultraschallgebers auf die Fahrbahnoberfläche trifft. Durch ein Beladen des Fahrzeugs, das zu einer Senkung und Abwärtsneigung der hinteren, an dem Fahrzeug angeordneten Ultraschallgeber führt, kann dieser Effekt noch verstärkt werden. Insbesondere bei der Warnung vor einem Zusammenstoß können auch andere niedrige Objekte, z.B. ein Bordstein, zur Auslösung einer Fehlwarnung führen. Um diese Fehldetektionen zu vermeiden, wird die Empfindlichkeit der Empfänger reduziert. Dadurch wird jedoch auch die Reichweite des Messsystems reduziert, so dass ein Bereich, in dem eine Abstandsmessung technisch möglich wäre, nicht voll ausgenutzt werden kann. Ferner kann durch eine Reflexion an einer glatten Fläche das Signal über diese Fläche zu dem Hindernis umgelenkt und erst von dort zurück reflektiert werden, so dass ein viel zu großer Absand zu dem Hindernis angezeigt wird. Ferner können Störungen durch Überreichweiten und durch in der Nähe betriebene, andere Abstandsmesssysteme auftreten. Es ist bekannt, die Reichweite des Empfängers in Abhängigkeit von einer räumlichen Anordnung des Empfängers zu justieren. Hierdurch kann jedoch die Detektion von Phantomzielen, die Detektion einer Überreichweite und eine Einschränkung des gesamten Detektionsbereichs nicht verhindert werden.

Dokument D1 (US 5793704) beschreibt eine Vorrichtung und ein Verfahren zur Abstandsmessung mittels Ultraschall. Ultraschallwellen werden dabei ausgesendet und von einem Hindernis reflektiert. Der Zeitpunkt des Maximums der Amplitudenhüllkurve wird ermittelt und dient als Messgröße für die Rücklaufdauer der Signalpulse. Um diesen Zeitpunkt exakt zu ermitteln, muss das Abstandsmesssystem aus D1 kalibriert werden. Zur Kalibrierung werden Ultraschallwellen zu einem Kalibrierungsziel in einer bekannten Entfernung gesendet und die Zeitpunkte der Amplitudenmaxima des empfangenen Signals gemessen. Die Kalibrierung umfasst auch eine Messung des Verstärkungslevels des Empfangsschaltkreises. Bei der eigentlichen Abstandsmessung werden mindestens zwei Pulse gesendet. Der erste Puls dient dabei zur groben Schätzung der Distanz zum Hindernis. Der Verstärkungslevel des Empfängerschaltkreises wird an diese Schätzung angepasst, so dass eine größtmögliche Amplitude zur Bestimmung des Maximums der reflektierten Einhüllenden zur Verfügung steht, ohne dass der Empfänger in Sättigung geht. Der zweite gesendete Puls wird dann zur eigentlichen Abstandsmessung verwendet.

Dokument D2 (EP 0142 733 A2) beschreibt eine Vorrichtung zur Abstandsmessung bei der direkt übersprechende Signale vom Sender zum Empfänger unterdrückt werden. Dazu wird die Einhüllende des empfangenen Signals bestimmt und mit einem vorgegebenen Schwellenwert verglichen. Wird der Schwellenwert überschritten wird ein erstes Signal ("judgement signal") erzeugt. Des Weiteren wird ein zweites Signal ("mask signal") erzeugt, das eine bestimmte Totzeit aufweist, d. h. das zweite Signal steigt nach einer vorgegebenen Zeit, nach der gesendet wurde, an. In der Auswerteeinheit werden beide Signale mit einer UND-Verknüpfung verbunden. Auf diese Weise werden unerwünschte Teile des empfangenen Signals unterdrückt.

Dokument D3 (US 4677599) beschreibt eine Vorrichtung und ein Verfahren zur Abstandsmessung. Es wird dabei von einer Triggerschaltung ein Trigger zum Aussenden eines Ultraschallsignals an einen Sender gesendet. Dieses Signal wird ebenfalls zum Empfänger gesendet und auf das empfangene Signal aufmoduliert, solange der Sender sendet. Somit kann die Auswerteeinheit die Teile des empfangenen Signals unterdrücken, die durch direktes Übersprechen vom Sender zum Empfänger entstehen.

### Vorteile der Erfindung

Das erfindungsgemäße Verfahren zur Abstandsmessung mit den Merkmalen des Hauptanspruchs hat demgegenüber den Vorteil, dass die Amplitude des empfangenen Signals ermittelt und ausgewertet wird. Neben einem gemessenen Entfernungswert steht damit die Amplitude des empfangenen Signals ebenfalls zur Verfügung, so dass anhand der Amplitude nach jeder einzelnen Messung zwischen für die Abstandsmessung relevanten und irrelevanten Signalen unterschieden werden kann, da die Größe der Amplitude eine Aussage darüber zulässt, wie stark das ausgesendete Signal von einem Hindernis zurück reflektiert wurde. Bei Störreflexionen, z.B. bei Reflektionen an einer rauhen Oberfläche, wird die Amplitude des empfangenen Signals recht klein sein, während sie bei einer Reflexion an einer glatten, gut reflektierenden Fläche gut sein wird und daher eine hohe Amplitude des empfangenen Signals verursacht.

Durch die in den Unteransprüchen aufgeführten Maßnahmen sind vorteilhafte Weiterbildungen und Verbesserungen des im Hauptanspruch angegebenen Verfahrens zur Abstandsmessung möglich. Besonders vorteilhaft ist, das Maximum in einer Umgebung des Maximums einer Hüllkurve des empfangenen Signals zu ermitteln. In der Regel wird die Frequenz des abtastenden Signals viel größer als die Frequenz eines Wellenzuges sein, den eine Einhüllende bezüglich des Signalbetrags bildet. Desto größer die Frequenz des abtastenden Signals gegenüber dem Verlauf der Hüllkurve ist, desto genauer läßt sich der Zeitpunkt des Empfangs des ausgestrahlten Signals bestimmen, das sich ebenfalls aus einer Vielzahl von Wellenzügen zusammensetzt.

Weiterhin ist vorteilhaft, die Größe der Amplitude mit einem Grenzwert zu vergleichen und das empfangene Signal nur bei einer Überschreitung des Grenzwerts für die Entfernungsmessung zu verwenden. Hierdurch wird ausgeschlossen, dass störende Reflektionen oder Phantomsignale für eine Abstandsmessung verwendet werden.

Weiterhin ist vorteilhaft, den Grenzwert in Abhängigkeit von einem Fahrzeugzustand und/oder einer Fahrzeugbetriebsart zu wählen. Hierdurch ist eine Anpassung z.B. an die Geschwindigkeit und an die verschiedenen Fahrsituationen möglich, z.B. normales Fahren auf einer Straße oder ein Einparkvorgang. Zudem können auch eine Beladung des Fahrzeugs oder das Anbringen einer Anhängerkupplung berücksichtigt werden.

Weiterhin ist vorteilhaft, die Größe der Amplitude und damit die Position eines Maximums dann zu bestimmen, wenn eine erste Ableitung der Hüllkurve einen vorgegebenen Schwellwert unterschreitet, nachdem sie diesem Schwellwert zuvor überschritten hatte. Hierdurch können sehr flache Maxima und Minima, die durch ein Rauschen bei dem Messvorgang verursacht werden, von der Untersuchung ausgeschlossen werden, so dass eine Auswertung vereinfacht werden kann. Weiterhin ist vorteilhaft, zusammen mit einem Auftreten eines Maximums der Hüllkurve ein Signal der Größe der Amplitude an eine Auswerteeinheit zu übertragen, so dass beide Informationen für die Auswertung zugleich zur Verfügung stehen. Besonders vorteilhaft ist hierbei, dass die Größe der Amplitude mittels der Länge einer Pulsdauer des übertragenen Signals codiert wird. Ein solches Signal ist leicht auswertbar, zeitlich kurz und insbesondere auch kompatibel zu Vorgängersystemen, bei denen mit einem gepulsten Signal nur das Auftreten eines Maximums an die Auswerteeinheit übertragen wird.

Weiterhin ist vorteilhaft, bei mehreren zeitlich aufeinanderfolgenden Maxima das Maximum mit der größten Amplitude für eine weitere Auswertung zu berücksichtigen. Hierdurch wird das Maximum ausgewählt, bei dem die Reflexion an einer Oberfläche am stärksten war.

### Zeichnung

Ausführungsbeispiele der Erfindung sind in der Zeichnung dargestellt und in der nachfolgenden Beschreibung näher erläutert. Es zeigen Figur 1 ein Kraftfahrzeug mit Abstandsmessvorrichtungen, die erfindungsgemäß betrieben werden, Figur 2 ein Beispiel für ein ausgesendetes und ein empfangenes Signal. Figur 3 zeigt die Entstehung von Störechos und Phantomsignalen. Figur 4 zeigt eine erste, erfindungsgemäße Empfangsvorrichtung zur Durchführung des erfindungsgemäßen Verfahrens. Figur 5 zeigt eine zweite erfindungsgemäße Empfangsvorrichtung zur Durchführung des erfindungsgemäßen Verfahrens. Figur 6 zeigt einen Zeitverlauf eines empfangenen Signals, eine Ableitung dieses Signals und eine Spannung an einem Signalausgang einer erfindungsgemäßen Empfangsvorrichtung.

### Beschreibung des Ausführungsbeispiels

Die vorliegende Erfindung kann für beliebige Abstandsmessverfahren verwendet werden, insbesondere für Meßverfahren, bei denen die Abstrahlung eines Signals nicht auf einen sehr engen Strahlkegel beschränkt ist, sondern bei denen ein weiter Strahlkegel gewünscht ist, um einen möglichst großen Raumbereich abdecken zu können. Insbesondere ist die vorliegende Erfindung damit für eine Abstandsmessung mittels Radar und mittels Ultraschallwellen geeignet. Im Folgenden wird die vorliegende Erfindung anhand einer Ultraschallabstandsmessvorrichtung in einem Kraftfahrzeug erläutert.

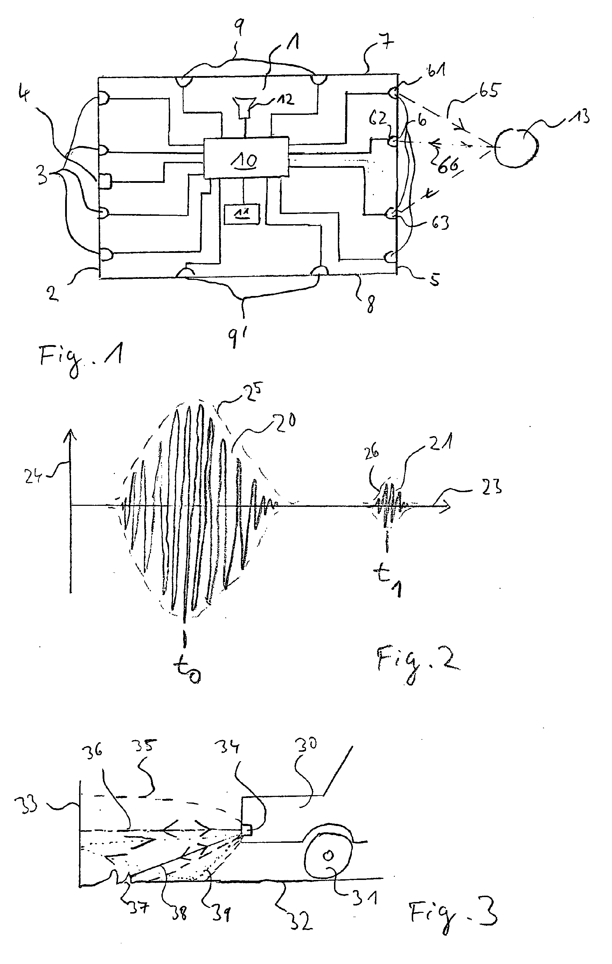

In der Figur 1 ist ein Kraftfahrzeug 1 dargestellt, bei dem an einer Frontseite 2 Ultraschallwandler 3 und ein Radarsensor 4 angeordnet sind. An einer Rückseite 5 des Fahrzeugs sind ebenfalls Ultraschallwandler 6 angeordnet. An den Fahrzeugseitenwänden 7, 8 sind Radarsensoren 9, 9' angeordnet. Die Wandler bzw. Sensoren sind mit einer Auswerteeinheit 10 verbunden, die über eine Anzeige 11 und/oder einen Lautsprecher 12 optische bzw. akustische Warnhinweise ausgibt, wenn eine vorgegebene Entfernung unterschritten wird, und die Entfernungswerte zu einem Hindernis ausgibt. Die Ultraschallwandler 3, 6 dienen in einem ersten Betriebszustand als Ultraschallsender und in einem zweiten Betriebszustand als Ultraschallempfänger.

Von einem ersten Ultraschallwandler 61 wird ein erstes Ultraschallsignal 65 zu einem Hindernis 13 hinter der Fahrzeugrückseite 5 abgestrahlt und von dem Hindernis 13 zu einem dritten Ultraschallwandler 63 reflektiert. Während der erste Ultraschallwandler 61 sich in einem Sendemodus befindet, befindet sich der dritte Ultraschallwandler 63 bei Eintreffen des reflektierten Signals 64 in einem Empfangszustand. Sowohl der Sendezeitpunkt als auch der Empfangszeitpunkt werden von den Ultraschallwandlern 61, 63 zu der Auswerteeinheit 10 übertragen. Zusätzlich wird von dem dritten Ultraschallwandler 63 die Amplitude des empfangenen ersten Ultraschallsignals 65 an die Auswerteeinheit 10 übertragen. Von einem zweiten Ultraschallwandler 62 wird ein zweites Ultraschallsignal 66 zunächst in Richtung des Hindernisses 13 abgestrahlt und von diesem direkt zurück zu dem zweiten Ultraschallwandler 62 reflektiert, der sich bei dem Eintreffen des zweiten Ultraschallsignals 66 in einem Empfangszustand befindet.

Auch der zweite Ultraschallsender überträgt den Sende- und den Empfangszeitpunkt an die Auswerteeinheit 10. In einem weiteren Ausführungsbeispiel kann auch direkt die Differenz zwischen Aussenden und Abstrahlen des Signals von dem zweiten Ultraschallwandler 62 an die Auswerteeinheit 10 übertragen werden. Zusammen mit dem Empfangszeitpunkt des zweiten Ultraschallsignals 66 wird ebenfalls eine Amplitudengröße des zweiten Ultraschallsignals an die Auswerteeinheit 10 übertragen.

Die Auswerteeinheit 10 bestimmt aus den übertragenen Signalen den Abstand zu dem Hindernis 13 und gibt bei einer Unterschreitung eines vorgegebenen Abstandes, z.B. von einem Abstand von einem Meter ein Warnsignal an einen Benutzer aus. In einem weiteren Ausführungsbeispiel kann eine Auswertung der gemessenen Signale auch in einer in die Ultraschallsende- und Empfangseinheit selbst integrierten Auswerteeinheit erfolgen. An eine zentrale Auswerteschaltung im Fahrzeug wird dann eine von der Ultraschallsende- und Empfangseinheit berechnete Entfernung zu einem Hindernis übermittelt. In der zentrale Auswerteschaltung werden dann die von verschiedenen Sensoren bestimmten Entfernungen verarbeitet, die Positionen von Hindernissen um das Fahrzeug werden berechnet und gegebenenfalls wird eine Warnung ausgegeben.

In der Figur 2 ist ein Beispiel für ein von einem Ultraschallwandler abgestrahltes Signal 20 und ein von einem Ultraschallempfänger empfangenes Signal 21 über einer Zeitachse 23 als X-Achse dargestellt, wobei gegenüber einer Y-Achse 24 die Signalamplitude aufgetragen ist. Die Ultraschallwellen werden vorzugsweise über die Anregung einer Schwingungsmembran erzeugt. Hierbei erfolgt keine einmalige Anregung, sondern die Membran wird zu einem vorgegebenen Zeitpunkt zu einer Schwingung angeregt und erreicht zum Zeitpunkt t0 ihre maximale Anregung. Das Sendesignal schwingt dabei unterhalb einer ersten Hüllkurve 25. Von dem Ultraschallempfänger wird das empfangene Signal 21 nur abgeschwächt aufgenommen, da sich das Signal auf einen Raumwinkelbereich verteilt und auch die Reflexion nicht verlustfrei erfolgt. Ein Maximum einer zweiten Hüllkurve 26, innerhalb der das empfangene Signal 21 verläuft, entspricht dem Maximum der ersten Hüllkurve 25, so dass sich die Laufzeit des Signals aus der Zeitdifferenz zwischen dem Zeitpunkt t1, an dem das Maximum der zweiten Hüllkurve 26 liegt, und dem Zeitpunkt t0 bestimmt. Unter Berücksichtigung der Schall- bzw. Lichtgeschwindigkeit lässt sich nun die zurückgelegte Wegstrecke ermitteln.

In der Figur 3 ist ein Kraftfahrzeug 30, das mit seinen Rädern 31 auf einem Fahrweg 32 fährt, vor einem Hindernis 33 dargestellt. An dem Kraftfahrzeug 30 ist eine Ultraschallsende- und Empfangseinheit 34 angeordnet, die eine Ultraschallwellenkeule 35 ausstrahlt. Die Ultraschallwellen eines ersten Ultraschallsignals treffen in einem direkten Weg 36 auf das Hindernis 33, werden von diesem reflektiert und von der Ultraschallsende- und Empfangseinheit 34 detektiert. Der Fahrweg 32 weist jedoch Bodenunebenheiten 37 auf, z.B. Äste oder Steine, die dazu führen, dass ein zweites Ultraschallsignal 38 mit einer verkürzten Laufzeit gegenüber dem ersten Ultraschallsignal entlang des direkten Weges 36 auftrifft. Ferner kann auch der Fahrweg 32, insbesondere wenn dieser besonders glatt ausgeführt ist, zu einer Reflexion eines dritten Ultraschallsignals 39 führen, das von dem Hindernis 33 reflektiert wird und mit einem im Vergleich zu dem direkten Weg 36 verlängerten Laufweg wieder bei der Ultraschallsendeund Empfangseinheit 34 eintrifft. Dies führt dazu, dass das abgestrahlte Signal 20 in der Figur 2 zu mehreren empfangenen Signalen 21 führt. Diese Signale werden sich in ihrer Amplitude unterscheiden, da die Reflexion des empfangenen Signals an den Bodenunebenheiten 37, z.B. in Form von Ästen oder Steinen, stark streut und nur eine geringe Amplitude zulassen wird. Auch das dritte Ultraschallsignal 39 wird durch die mehrfache Reflexion abgeschwächt. Wird bei einer Auswertung des von der Ultraschallsende- und Empfangseinheit 34 empfangenen Ultraschallsignals das Signal mit der größten Amplitude berücksichtigt, so kann die tatsächliche Entfernung von dem Kraftfahrzeug 30 zu dem Hindernis 33 ermittelt werden.

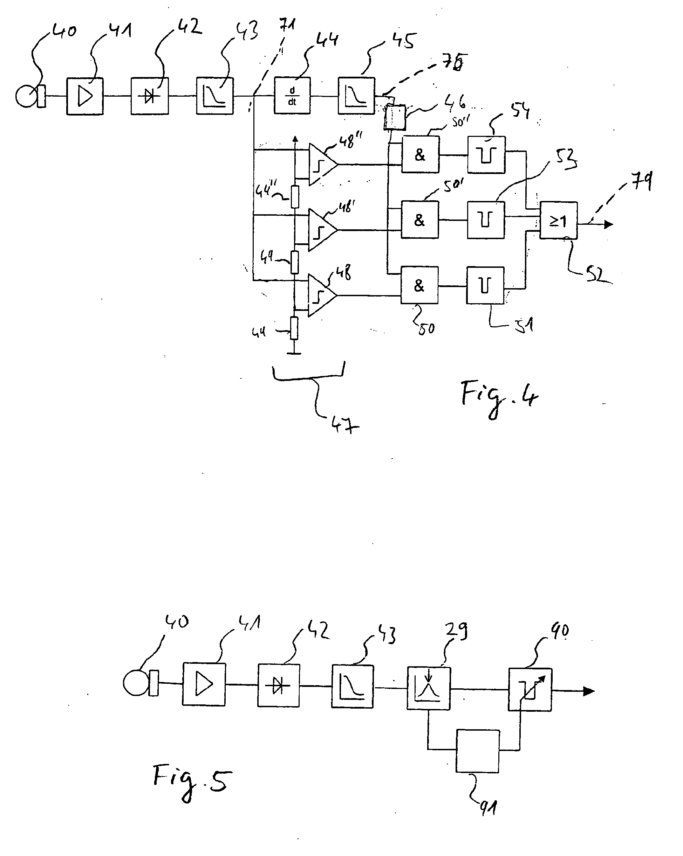

In der Figur 4 ist ein erstes Ausführungsbeispiel für eine Auswertung eines empfangenen Signals, hier eines Ultraschallsignals, dargestellt. Das Ultraschallsignal wird von einem Ultraschallempfänger 40 detektiert. Die anschließende Auswertung kann nun in der Empfängereinheit selber erfolgen oder das von dem Ultraschallempfänger 40 ermittelte Signal wird an die zentrale Auswerteeinheit 10 übermittelt. In dem hier beschriebenen Ausführungsbeispiel ist eine Auswertung des empfangenen Signals in eine Empfängereinheit integriert, die z.B. an einem Stoßfänger des Kraftfahrzeugs 1 angeordnet ist. Mit einem an den Ultraschallempfänger 40 angeschlossene Verstärkereinheit 41 wird das empfangene Signal verstärkt und anschließend in einem Gleichrichter 42 gleichgerichtet. Anschließend wird das gleichgerichtete Signal auf einen ersten Tiefpass 43 gegeben. Hierdurch findet eine Glättung des hochfrequenten Ultraschallsignals statt, so dass die Hüllkurve des Betrags des Ultraschallsignals von dem Ausgang des ersten Tiefpasses 43 ausgegeben wird. Die Hüllkurve entspricht der Einhüllenden der Schallintensität des Ultraschallsignals am Empfänger. Die Hüllkurve wird auf ein Differenzierglied 44 gegeben, mit dem die Kurve der ersten Ableitung der Hüllkurve ermittelt wird. Die erste Ableitung wird in einem hieran anschließenden, zweiten Tiefpass 45 erneut geglättet.

Der Ausgang des zweiten Tiefpasses 45 wird auf einen Komparator 46 gegeben. Der Komparator 46 vergleicht das Eingangssignal mit einem Schwellwert, der größer als null ist. Fällt das Eingangssignal von einem Wert, der größer als der Schwellwert ist, zu einem Wert, der kleiner als der Schwellwert ist, so gibt der Komparator 46 ein kurzes Signal aus. Ansonsten ist der Ausgang des Komparators 46 auf Low geschaltet. Hierdurch wird erreicht, dass an Nulldurchgängen der ersten Ableitung der Hüllkurve mit fallender Flanke nur bei einem deutlichen Maximum eine Auswertung erfolgt. Hierdurch werden Fehlmessungen vermieden, da durch unvermeidliches Grundrauschen kleine, stark verbreiterte Maxima auftreten können. Das von dem ersten Tiefpass 43 ausgegebene Ausgangssignal wird hierzu auf eine aus drei Komparatoren bestehenden Komparatorstufe 47 gegeben, wobei die Zahl der Komparatoren und damit die Zahl der festlegbaren Grenzwerte beliebig ist. Mit einem ersten Anschluss werden die Komparatoren 48, 48', 48'' an jeweils unterschiedliche Spannungen angelegt, die mittels einer Serienschaltung von Ohmschen Widerständen 49, 49', 49'' angelegt wird, die zwischen den ersten Eingängen der Komparator, Masse und einer Betriebsspannung geschaltet sind. Auf die zweiten Eingänge der Komparatoren wird jeweils das Ausgangssignal des ersten Tiefpasses 43 gegeben. Überschreitet die an dem ersten Komparator 48 anliegende Spannung den ersten Spannungswert, so schaltet der Ausgang des ersten Komparators 48 auf High und ein erstes Undgatter 50 schaltet bei Anliegen des Ausgangssignals des Komparators 46 ebenfalls auf High, wodurch von einer ersten Signalerzeugungseinheit 51 ein Rechteckpulssignal der Zeitdauer τ1 an ein erstes Odergatter 52 ausgegeben wird. Wird auch eine zweite Spannungsschwelle überschritten, so wird das Ausgangssignal des zweiten Komparators 48' ebenfalls auf High geschaltet, das an einem zweiten Undgatter 50' anliegt. Ist das Ausgangssignal des Komparators 46 auch auf High geschaltet, so wird von dem zweiten Undgatter 50'eine zweite Signalerzeugungseinheit 53 getriggert, die beginnend mit dem Rechtecksignal der ersten Signalerzeugungseinheit 51 ein zweites Rechtecksignal der Dauer τ2 an den zweiten Eingang des Odergatters 52 ausgibt, wobei die Zeitdauer τ2 größer als τ1 ist. Bei einem Überschreiten eines dritten Schwellwertes gibt der dritte Komparator 48'' ebenfalls ein High-Signal an ein drittes Undgatter 50'', das ebenfalls bei einem High-Signal von dem Komparator 46 eine dritte Signalerzeugungseinheit 54 auslöst, die beginnend mit den übrigen Rechtecksignalen an das Odergatter 52 ein Rechtecksignal mit der Zeitdauer τ3 ausgibt. Hierbei ist τ3 größer als τ2. Das Ausgangssignal des Odergatters 52 wird an die Auswerteeinheit zur Bestimmung einer Entfernung weitergeleitet. Über eine in der Figur 4 nicht dargestellte Verbindung wird von einem Ultraschallwandler mit Aussenden des Sendesignals ebenfalls dieser Zeitpunkt in geeigneter Weise an die Auswerteeinheit 10 übermittelt. Auch bei dem Ausführungsbeispiel gemäß der Figur 5 kann sich ebenso wie bei der Ausführungsform gemäß der Figur 4 eine Auswerteeinheit in oder an den Ultraschallwandler unmittelbar anschließen, die dann direkt eine Entfernungsangabe an eine Auswerteschaltung oder eine Warnvorrichtung übermittelt.

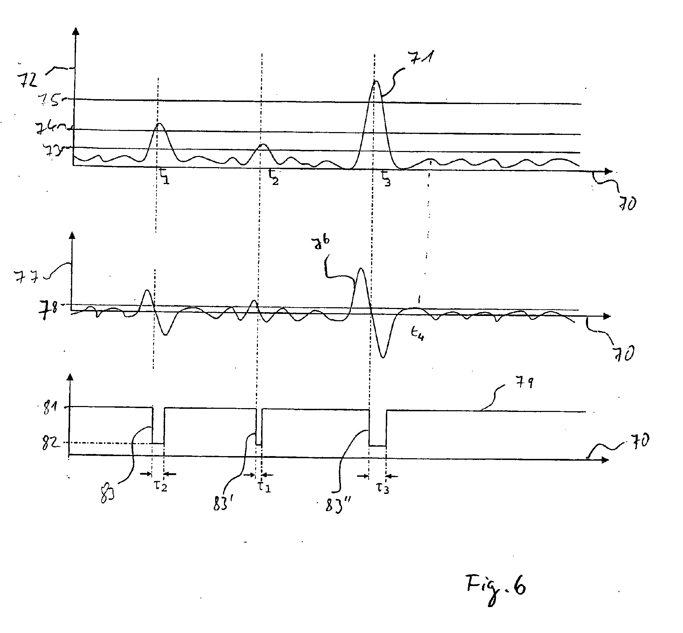

In der Figur 6 sind verschiedene Signale, die an verschiedenen Stellen der Vorrichtung gemäß der Figur 4 anliegen, über einer Zeitachse 70 aufgetragen. In einer ersten Auftragung ist ein Ausgangssignal des ersten Tiefpasses 43 dargestellt, also eine Hüllkurve 71 entsprechend einem gleichgerichteten Signal, das dem empfangenen Schallsignal entspricht. Die Hüllkurve 71, deren Amplitude auf einer Y-Achse 72 gegenüber der Zeitachse 70 als X-Achse aufgetragen ist, weist drei größere lokale Maxima zu den Zeitpunkten t1, t2 und t3 auf, die alle über einem ersten Schwellwert 73 liegen. Die Maxima t1 und t3 liegen auch oberhalb eines zweiten Schwellwertes 74. Nur das Maximum zum Zeitpunkt t3 liegt über einem dritten Schwellwert 75. Ferner ist in der Figur 6 die geglättete Ableitungskurve 76 dargestellt, also der Ausgang des zweiten Tiefpasses 45. Zu den Zeitpunkten t1, t2 und t3 fällt die Ableitungskurve 76, dessen Betrag an einer Y-Achse 77 gegenüber der Zeitachse 70 aufgetragen ist, von einem Wert, der größer als ein Schwellwert 78 ist, unter diesen Schwellwert 78. Indem der Schwellwert 78 größer als Null gewählt wird, werden Maxima, die lediglich durch Rauschen des Signals verursacht werden, nicht zu einer Messung herangezogen. Ferner wird auch zu einem Zeitpunkt t4 der Schwellwert 78 von oben nach unten durchquert. Zu dem Zeitpunkt t4 ist jedoch die Amplitude des Hüllkurvensignals so gering, dass keiner der Komparatoren 48, 48', 48'' anspricht und daher kein Signal ausgegeben wird. Zu den Zeitpunkten t1, t2 und t3 schaltet der Komparator 46 durch, so dass zu diesem Zeitpunkt über die Komparatoren 48, 48', 48'' die Amplitude der Hüllkurve ausgelesen wird. Zu dem Zeitpunkt t1 liegt die Amplitude oberhalb des zweiten Schwellwerts 74, so dass sowohl der erste Komparator 48 als auch der zweite Komparator 48' durchschalten. In der Figur 6 ist das Ausgangssignal 79 des Odergatters 52 dargestellt. Liegt an dem Odergatter 52 kein Signal an, so weist das Ausgangssignal 79 einen erster Signalpegel 81 auf. Liegt dagegen an dem Odergatter 52 ein Signal an, so schaltet das Odergatter 52 auf einen zweiten Signalpegel 82. Zu dem Zeitpunkt t1 liegt für die Dauer, die von der zweiten Signalerzeugungseinheit 53 vorgegeben wird, ein Signal an dem Odergatter 52 an, so dass für die Dauer τ2 das Ausgangssignal 79 auf den zweiten Signalpegel 82 schaltet. Zu dem Zeitpunkt t2 schaltet nur der erste Komparator 48 durch, so dass für die Zeitdauer τ1 das Ausgangssignal 79 von dem ersten Signalpegel 81 auf den zweiten Signalpegel 82 schaltet. Zu dem Zeitpunkt t3 werden alle Schwellwerte überschritten, so dass alle Komparatoren 48, 48', 48'' durchschalten und für die Zeitdauer τ3 das Ausgangssignal 79 auf den zweiten Signalpegel 82 schaltet. Die Auswerteeinheit erhält nun über die ersten Signalflanken 83, 83', 83'' eine Information darüber, zu welchem Zeitpunkt die Hüllkurve des empfangenen Schallsignals maximal ist. Ferner erhält sie eine Information über die Amplitude des empfangenen Schallsignals bzw. der Hüllkurve mittels einer variablen Dauer τ des Signalpulses. Bezüglich der Darstellung in der Figur 3 können z.B. die zu den Zeitpunkten t1 und t2 detektierten Signale Störsignale sein, die von Bodenunebenheiten 37 reflektiert werden. Das Signal zum Zeitpunkt t3 hingegen ist das Signal, das den tatsächlichen Abstand zu einem Hindernis angibt. Weitere Reflektionen verlieren sich bei der Darstellung gemäß der Figur 6 in dem Signalrauschen der Hüllkurve.

In der Figur 5 ist ein zweites Ausführungsbeispiel zur Durchführung des erfindungsgemäßen Verfahrens dargestellt, bei der keine Schwellwertdetektion erfolgt, sondern bei der die Zeitdauer des an die Auswerteeinheit 10 übertragenen Signalpulses kontinuierlich verändert wird. Der Aufbau gemäß der Figur 5 entspricht dem Aufbau gemäß der Figur 4 bis zu dem Ausgang des ersten Tiefpasses 43. Das Ausgangssignal des ersten Tiefpasses 43 wird auf eine Peak-Detektionseinheit 29 gegeben. Sobald von dieser ein größerer Peak, also ein Maximum mit einer Amplitude über einem vorgegebenen Schwellwert, detektiert wird, wird ein steuerbarer Pulsgenerator 90 ausgelöst. Die Pulsdauer wird dabei über eine Pulsdauerfestlegungseinheit 91 bestimmt. Das Ausgangssignal des Pulsgenerators 90 wird ebenfalls an die Auswerteeinheit 10 weitergeleitet, in der eine Bestimmung der Größe der Amplitude erfolgt. Die Pulsdauerfestlegungseinheit 91 umfasst z.B. einen Kondensator, der mit der Spannung des Ausgangssignals des ersten Tiefpasses 43 aufgeladen und anschließend mit einem konstanten Strom entladen wird. Die Entladungsdauer ist aufgrund des konstanten Entladungsstroms proportional zu der Spannung, mit der der Kondensator zuvor aufgeladen wurde.

Weiterhin ist möglich, bei einem erstmaligen Überschreiten einer unteren Schwelle den Zeitpunkt eines Peaks zu markieren. Anschließend wird innerhalb eines bestimmten Intervalls δx die maximale Amplitude bestimmt. Das Maximum kann dabei auch durch Vergleich mit festen Schwellwerten bestimmt werden. Am Ende des Intervalls δx wird die ermittelte Entfernung und die ermittelte Amplitude zu der Auswerteeinheit übertragen. Die Länge des Intervalls entspricht vorteilhafterweise der halben, maximal möglichen Breite eines Peaks der Hüllkurve. Damit wird gewährleistet, dass ein einzelnes Objekt hoher Amplitude nicht mehrere Peaks erzeugt. Fällt das Signal nach Ablauf des Intervalls δx ab, so wird vor der Detektion eines neuen Peaks gewartet, bis die Hüllkurve den unteren Schwellwert unterschreitet. Steigt das Signal dagegen weiter an, wird sofort ein weiterer Peak detektiert und eine Amplitudenbewertung wird durchgeführt. Spielt die Unterdrückung mehrfacher Peaks bei der Detekion einzelner Objekte keine Rolle, kann die Länge des Intervalls δx auch deutlich kleiner als eine typische Peakbreite gewählt werden, vorausgesetzt, dass die Bandbreite der Datenübertragung die Verarbeitung einer höheren Datenrate gestattet. Als Ausgangssignal ergibt sich dann eine Peakfolge, die einer Analog-Digitalwandlung der Hüllkurvenform entspricht. Die Detektion von Objekten und deren Trennung wird dabei in der Auswerteeinheit durchgeführt.

Sollte die Übertragung von Meßwerten in der Auswerteeinheit mittels einer Pulsmodulation erfolgen, bei der die zeitliche Lage der Pulse einer gemessenen Entfernung entspricht, so ist die räumliche Trennschärfe der Objektdetektion auch durch die zeitliche Pulsbreite der Datenübertragung begrenzt. Ist die maximal mögliche Pulsbreite δt größer als es der minimal auftretende Abstand von Peak-Maxima entspricht, wird in vorteilhafter Weise bei einem Überschreiten des Signals einer unteren Schwelle nach lokalen Maxima gesucht. Das erste detektierte Maximum markiert einen ersten Abstand X1 und die zugehörige Amplitude wird gespeichert. Danach wird ein Zeitintervall δt gewartet, bis diese Daten übertragen werden. Wird innerhalb des Zeitraums δt ein weiteres Maximum mit einer größeren Amplitude erkannt, wird anstelle der ersten detektierten Amplitude die größere Amplitude gespeichert. Sobald der Zeitraum δt abgelaufen ist, kann ein neuer Zyklus mit einer Detektion eines neuen Maximums der Hüllkurve beginnen. Hierbei erfolgt die Datenübertragung des zu X1 gehörenden Maximums an die Auswerteeinheit 10.

Neben der anhand der Figur 6 erläuterten zeitkontinuierlichen Codierung der Entfernung, bei der das Zeitintervall zwischen dem Start der Messung und der ersten Flanke des an die Auswerteeinheit 10 übertragenen Signals proportional zu der Entfernung ist und die Pulsweite in Abhängigkeit von der Amplitudengröße gewählt wird, kann die Amplitude auch über einen weiteren Datenkanal oder über nachfolgende Datensignale, z.B. einer Mehrbitcodierung, die dem Pulssignal folgt, übertragen werden. Weiterhin ist auch möglich, die Größe der Amplitude im Anschluß an das erste Signal, das das Maximum der Hüllkurve bezeichnet, zu übertragen.

Die beschriebenen Anwendungen eignen sich auch zur Durchführung einer Echoauswertung, bei der die Echosignale stochastisch codiert sind, da die Detektionsempfindlichkeit nicht von der Meßentfernung abhängt.

## Patentansprüche

1. Verfahren zur Ermittlung relevanter Signale bei einer Abstandsmessung, wobei ein Ultraschallsignal (20, 39, 65) von einer Ultraschallsignalquelle (3, 6, 34, 61, 62, 63) ausgestrahlt wird, wobei das Ultraschallsignal (20, 39, 65) von einem Hindernis (13) reflektiert und von einem Empfänger (3, 6, 34, 40, 61, 62, 63) empfangen wird, wobei eine Information über den Zeitpunkt des Signalempfangs eine erste Information ist, die an eine Auswerteeinheit (10) übertragen wird, **dadurch gekennzeichnet, dass** eine Größe der Amplitude des empfangenen Ultraschallsignals (21, 39, 66), eine zweite Information ist, die an die Auswerteeinheit (10) übertragen wird, wobei die Größe der Amplitude des empfangenen Ultraschallsignals (21, 39, 66) in einer Umgebung eines Maximums einer Hüllkurve (t1, t2, t3) des empfangenen Ultraschallsignals (21, 39, 66) ermittelt wird und die beiden Informationen in Form eines Rechteckpulssignals (79) zusammen an die Auswerteeinheit (10) übertragen werden, wobei die Auswerteeinheit über die erste Signalflanke des Rechteckpulssignals die erste Information erhält, zu welchem Zeitpunkt die Hüllkurve des empfangenen Schallsignals maximal ist und wobei die Auswerteeinheit die zweite Information über die Amplitude des empfangenen Schallsignals bzw. der Hüllkurve mittels einer variablen Dauer des Signalpulses erhält und die Größe der Amplitude mit einem Grenzwert verglichen wird und dass das empfangene Signal nur bei einer Überschreitung des Grenzwerts für die Entfernungsmessung verwendet wird.

2. Verfahren nach Anspruch 1, **dadurch gekennzeichnet, dass** ein Abstand des Hindernisses (13) aus der Zeitdifferenz zwischen dem Sendezeitpunkt t0 des Signals und dem Empfangszeitpunkt t1 des empfangenen Signals unter Berücksichtigung der Schallgeschwindigkeit ermittelt wird.

3. Verfahren nach Anspruch 1, **dadurch gekennzeichnet, dass** geprüft wird, ob die Amplitude einen oder mehrere Schwellwerte (73, 74, 75) überschreitet, und dass ein Überschreiten des einen oder der mehreren Schwellwerte (73, 74, 75) als eine Information über die Größe der Amplitude an die Auswerteeinheit (10) übertragen wird.

4. Verfahren nach Anspruch 3, **dadurch gekennzeichnet, dass** der Grenzwert in Abhängigkeit von einem Fahrzeugzustand und/oder einer Fahrzeugbetriebsart gewählt wird.

5. Verfahren nach Anspruch 3, **dadurch gekennzeichnet, dass** die Größe der Amplitude dann bestimmt wird, wenn eine erste Ableitung der Hüllkurve (76) des Signals von einem Wert größer als ein Schwellwert (78) zu einem Wert kleiner als der Schwellwert fällt, wobei der Schwellwert (78) größer als Null ist.

6. Verfahren nach einem der vorhergehenden Ansprüche, **dadurch gekennzeichnet, dass** bei mehreren zeitlich aufeinanderfolgenden Maxima der Hüllkurve (t1, t2, t3) das Maximum mit der größten Amplitude für eine weitere Auswertung berücksichtigt wird.

7. Verfahren nach einem der vorhergehenden Ansprüche, **dadurch gekennzeichnet, dass** eine Messung mit einer Vielzahl an einem Fahrzeug angeordneter Empfängern durchgeführt wird und dass eine Richtung des Hindernisses ermittelt wird.

8. Vorrichtung zur Durchführung des Verfahrens nach einem der vorhergehenden Ansprüche, wobei ein Signal (20, 39, 65) von einer Signalquelle (3, 6, 34, 61, 62, 63) ausgestrahlt wird, wobei das Signal (20, 39, 65) von einem Hindernis (13) reflektiert und von einem Empfänger (3, 6, 34, 40, 61, 62, 63) empfangen wird,
wobei eine Information über den Zeitpunkt des Signalempfangs eine erste Information ist, die an eine Auswerteeinheit (10) übertragen wird, **dadurch gekennzeichnet, dass** eine Größe der Amplitude des empfangenen Ultraschallsignals (21, 39, 66), eine zweite Information ist, die an die Auswerteeinheit (10) übertragen wird, wobei die Größe der Amplitude des empfangenen Ultraschallsignals (21, 39, 66) in einer Umgebung eines Maximums einer Hüllkurve (t1, t2, t3) des empfangenen Ultraschallsignals (21, 39, 66) ermittelt wird und die beiden Informationen in Form eines Rechteckpulssignals (79) zusammen an die Auswerteeinheit (10) übertragen werden, wobei die Auswerteeinheit über die erste Signalflanke des Rechteckpulssignals die erste Information erhält, zu welchem Zeitpunkt die Hüllkurve des empfangenen Schallsignals maximal ist und wobei die Auswerteeinheit die zweite Information über die Amplitude des empfangenen Schallsignals bzw. der Hüllkurve mittels einer variablen Dauer des Signalpulses erhält und die Größe der Amplitude mit einem Grenzwert verglichen wird und dass das empfangene Signal nur bei einer Überschreitung des Grenzwerts für die Entfernungsmessung verwendet wird.

## Claims

1. Method for ascertaining relevant signals for a distance measurement, wherein an ultrasound signal (20, 39, 65) is emitted by an ultrasound signal source (3, 6, 34, 61, 62, 63), wherein the ultrasound signal (20, 39, 65) is reflected by an obstacle (13) and is received by a receiver (3, 6, 34, 40, 61, 62, 63), wherein a piece of information about the time of the signal reception is a first piece of information which is transmitted to an evaluation unit (10), **characterized in that** a magnitude for the amplitude of the received ultrasound signal (21, 39, 66) is a second piece of information which is transmitted to the evaluation unit (10), wherein the magnitude of the amplitude of the received ultrasound signal (21, 39, 66) is ascertained in an environment for a maximum in an envelope (t1, t2, t3) for the received ultrasound signal (21, 39, 66), and the two pieces of information are transmitted to the evaluation unit (10) together in the form of a square-wave pulse signal (79), wherein the evaluation unit obtains the first piece of information, concerning the time at which the envelope of the received sound signal is at a maximum, via the first signal edge of the square-wave pulse signal and wherein the evaluation unit obtains the second piece of information about the amplitude of the received sound signal or of the envelope by means of a variable duration for the signal pulse, and the magnitude of the amplitude is compared with a limit value, and **in that** the received signal is used for the range measurement only if the limit value is exceeded.

2. Method according to Claim 1, **characterized in that** a distance of the obstacle (13) is ascertained from the time difference between the transmission time t0 of the signal and the reception time t1 of the received signal by taking account of the speed of sound.

3. Method according to Claim 1, **characterized in that** a check is performed to determine whether the amplitude exceeds one or more threshold values (73, 74, 75), and **in that** an instance of the one or more threshold values (73, 74, 75) being exceeded is transmitted to the evaluation unit (10) as a piece of information about the magnitude of the amplitude.

4. Method according to Claim 3, **characterized in that** the limit value is chosen on the basis of a vehicle condition and/or a vehicle mode of operation.

5. Method according to Claim 3, **characterized in that** the magnitude of the amplitude is determined if a first derivation for the envelope (76) of the signal falls from a value greater than a threshold value (78) to a value less than the threshold value, the threshold value (78) being greater than zero.

6. Method according to one of the preceding claims, **characterized in that** when there are a plurality of chronologically successive maxima in the envelope (t1, t2, t3), the maximum having the greatest amplitude is taken into account for a further evaluation.

7. Method according to one of the preceding claims, **characterized in that** a measurement is performed using a multiplicity of receivers arranged on a vehicle and **in that** a direction of the obstacle is ascertained.

8. Apparatus for performing the method according to one of the preceding claims, wherein a signal (20, 39, 65) is emitted by a signal source (3, 6, 34, 61, 62, 63), wherein the signal (20, 39, 65) is reflected by an obstacle (13) and is received by a receiver (3, 6, 34, 40, 61, 62, 63),
wherein a piece of information about the time of the signal reception is a first piece of information which is transmitted to an evaluation unit (10), **characterized in that** a magnitude for the amplitude of the received ultrasound signal (21, 39, 66) is a second piece of information which is transmitted to the evaluation unit (10), wherein the magnitude of the amplitude of the received ultrasound signal (21, 39, 66) is ascertained in an environment for a maximum in an envelope (t1, t2, t3) for the received ultrasound signal (21, 39, 66), and the two pieces of information are transmitted to the evaluation unit (10) together in the form of a square-wave pulse signal (79), wherein the evaluation unit obtains the first piece of information, concerning the time at which the envelope of the received sound signal is at a maximum, via the first signal edge of the square-wave pulse signal and wherein the evaluation unit obtains the second piece of information about the amplitude of the received sound signal or of the envelope by means of a variable duration for the signal pulse, and the magnitude of the amplitude is compared with a limit value, and **in that** the received signal is used for the range measurement only if the limit value is exceeded.

## Revendications

1. Procédé de détermination de signaux pertinents lors d'une mesure de distance, un signal ultrasonique (20, 39, 65) étant émis par une source de signal ultrasonique (3, 6, 34, 61, 62, 63), le signal ultrasonique (20, 39, 65) étant réfléchi par un obstacle (13) et reçu par un récepteur (3, 6, 34, 40, 61, 62, 63), une information sur l'instant de réception du signal étant une première information qui est transmise à une unité d'interprétation (10), **caractérisé en ce qu'**une grandeur de l'amplitude du signal ultrasonique reçu (21, 39, 66) est une deuxième information qui est transmise à l'unité d'interprétation (10), la grandeur de l'amplitude du signal ultrasonique reçu (21, 39, 66) étant déterminée dans un environnement d'un maximum d'une courbe d'enveloppe (t1, t2, t3) du signal ultrasonique reçu (21, 39, 66) et les deux informations étant transmises conjointement à l'unité d'interprétation (10) sous la forme d'un signal à impulsions rectangulaires (79), l'unité d'interprétation recevant par le biais du premier front de signal du signal à impulsions rectangulaires la première information indiquant l'instant auquel la courbe d'enveloppe du signal sonore reçu est maximale et l'unité d'interprétation recevant la deuxième information sur l'amplitude du signal sonore reçu ou la courbe d'enveloppe au moyen d'une durée variable de l'impulsion du signal et la grandeur de l'amplitude étant comparée avec une valeur limite et **en ce que** le signal reçu n'est utilisé pour la mesure de distance qu'en cas de dépassement de la valeur limite.

2. Procédé selon la revendication 1, **caractérisé en ce qu'**une distance de l'obstacle (13) est déterminée à partir de la différence de temps entre l'instant d'émission t0 du signal et l'instant de réception t1 du signal reçu en tenant compte de la vitesse du son.

3. Procédé selon la revendication 1, **caractérisé en ce qu'**un contrôle est effectué pour vérifier si l'amplitude est supérieure à une ou plusieurs valeurs de seuil (73, 74, 75) et **en ce qu'**un dépassement de l'une ou des plusieurs valeurs de seuil (73, 74, 75) est transmis à l'unité d'interprétation (10) sous la forme d'une information sur la grandeur de l'amplitude.

4. Procédé selon la revendication 3, **caractérisé en ce que** la valeur limite est choisie en fonction d'un état de véhicule et/ou d'un mode de fonctionnement de véhicule.

5. Procédé selon la revendication 3, **caractérisé en ce que** la grandeur de l'amplitude est déterminée lorsqu'une première dérivée de la courbe d'enveloppe (76) du signal chute d'une valeur supérieure à une valeur de seuil (78) à une valeur inférieure à la valeur de seuil, la valeur de seuil (78) étant supérieure à zéro.

6. Procédé selon l'une des revendications précédentes, **caractérisé en ce qu'**en présence de plusieurs maximums successifs de la courbe d'enveloppe (t1, t2, t3), le maximum qui présente la plus grande amplitude est pris en compte pour une interprétation supplémentaire.

7. Procédé selon l'une des revendications précédentes, **caractérisé en ce qu'**une mesure est effectuée avec une pluralité de récepteurs disposés sur un véhicule et **en ce qu'**une direction de l'obstacle est déterminée.

8. Dispositif pour mettre en oeuvre le procédé selon l'une des revendications précédentes, un signal (20, 39, 65) étant émis par une source de signal (3, 6, 34, 61, 62, 63), le signal (20, 39, 65) étant réfléchi par un obstacle (13) et reçu par un récepteur (3, 6, 34, 40, 61, 62, 63),
une information sur l'instant de réception du signal étant une première information qui est transmise à une unité d'interprétation (10), **caractérisé en ce qu'**une grandeur de l'amplitude du signal ultrasonique reçu (21, 39, 66) est une deuxième information qui est transmise à l'unité d'interprétation (10), la grandeur de l'amplitude du signal ultrasonique reçu (21, 39, 66) étant déterminée dans un environnement d'un maximum d'une courbe d'enveloppe (t1, t2, t3) du signal ultrasonique reçu (21, 39, 66) et les deux informations étant transmises conjointement à l'unité d'interprétation (10) sous la forme d'un signal à impulsions rectangulaires (79), l'unité d'interprétation recevant par le biais du premier front de signal du signal à impulsions rectangulaires la première information indiquant l'instant auquel la courbe d'enveloppe du signal sonore reçu est maximale et l'unité d'interprétation recevant la deuxième information sur l'amplitude du signal sonore reçu ou la courbe d'enveloppe au moyen d'une durée variable de l'impulsion du signal et la grandeur de l'amplitude étant comparée avec une valeur limite et **en ce que** le signal reçu n'est utilisé pour la mesure de distance qu'en cas de dépassement de la valeur limite.
